# FASCICULE DE BREVET EUROPEEN

(11) **EP 3 449 333 B1**
(45) Date de publication et mention de la délivrance du brevet: **07.10.2020**
(21) Numéro de dépôt: 17719249.9
(22) Date de dépôt: 25.04.2017
(51) Int. Cl.: G05D 23/13, E03C 1/02, F16K 31/00, F16K 11/078

(54) **UNITÉ DE MÉLANGE ET ROBINET MITIGEUR COMPRENANT UNE TELLE UNITÉ DE MÉLANGE**
MISCHEINHEIT UND MISCHBATTERIE, DIE EINE SOLCHE MISCHEINHEIT UMFASST
MIXING UNIT AND MIXING FAUCET COMPRISING THE SAME

(30) Priorité: 26.04.2016 FR 1653676
(43) Date de publication de la demande: 06.03.2019
(73) Titulaire: Vernet, 91340 Ollainville (FR)
(72) Inventeur: FASSOLETTE, Pierre-Olivier, 91100 Corbeil Essonnes (FR)
(74) Mandataire: Lavoix
(86) Numéro de dépôt international: PCT/EP2017/059708
(87) Numéro de publication internationale: WO 2017/186665

(56) Documents cités:
- WO-A1-2015/086749
- DE-A1- 19 716 307
- FR-A1- 2 876 433
- FR-A1- 3 003 046

## Description

La présente invention concerne une unité de mélange et un robinet mitigeur comprenant une telle unité de mélange.

L'invention se rapporte au domaine de la robinetterie d'usage sanitaire. En particulier, les robinets dits « mitigeurs » permettent d'émettre un flux mitigé d'eau courante par mélange d'un flux d'eau chaude et d'un flux d'eau froide au sein d'une cartouche montée dans le corps du robinet. Le débit respectif des flux d'eau froide et d'eau chaude admis dans la cartouche peuvent être réglés à l'aide d'un levier de commande, afin de permettre un réglage de la température du flux mitigé par rotation du levier autour d'un axe, et du débit du flux mitigé par rotation de levier autour d'un deuxième axe.

La cartouche comprend dans la plupart des cas une paire de disques céramiques ajourés, l'un étant fixe, et l'autre étant mobile sous l'action du levier tout en étant en contact plan, glissant et étanche avec le disque fixe. En fonction de la position du disque mobile sur le disque fixe, des canaux sont formés pour permettre l'admission des flux d'eau froide et chaude au sein de la cartouche, avec un débit plus ou moins important, et ainsi entraîner leur mélange pour la formation du flux mitigé.

Certaines cartouches connues peuvent être dotées d'un boîtier additionnel séparé, et qui est rapporté contre la cartouche. Par exemple, le brevet FR-B-2 876 433 décrit une cartouche pour un robinet mitigeur équipée d'un module thermostatique additionnel accouplé de manière étanche à la base de la cartouche. Le module thermostatique additionnel est pourvu de moyens thermostatiques permettant, lorsque la température du flux mitigé excède une valeur de seuil prédéterminée, d'obturer le passage d'eau chaude avant son entrée dans la cartouche, afin de limiter automatiquement la température du flux.

Cependant, l'encombrement spatial que représente un tel module additionnel peut rendre difficile son adaptation au sein de certains robinets mitigeurs existants, qui offrent un espace d'accueil limité pour la cartouche et le module additionnel.

WO 2015/086749 A1 décrit une cartouche comprenant deux entrées d'eau chaude et d'eau froide, une chambre de sortie, ainsi que des disques de mélange. Cette cartouche comprend également un élément thermostatique, avec une partie thermosensible disposée dans la chambre de sortie, et une partie mobile en translation par rapport à la partie thermosensible, de façon coaxiale avec un axe principal de la cartouche. Cette cartouche connue comprend également un tiroir obturateur, lié à la partie thermosensible, de façon à assurer une régulation thermostatique de la température du flux d'eau sortant. Le tiroir obturateur est conçu pour obturer le passage de l'eau froide et de l'eau chaude au niveau d'une chambre de sortie, située en aval des disques de mélange, et ne permet pas une obturation de l'entrée d'eau chaude, située en amont des disques de mélange. Cette cartouche connue ne comprend pas d'obturateur de l'entrée d'eau chaude. L'axe de translation du tiroir obturateur étant coaxial à l'axe de la cartouche, le système de régulation thermostatique représente un encombrement relativement important en partie basse de la cartouche.

FR 3 003 046 A1 décrit un dispositif comprenant un système de régulation thermostatique dont le fonctionnement est similaire à celui de WO 2015/086749 A1.

Le document DE 197 16 307 décrit également un dispositif comprenant un système de régulation thermostatique.

Par conséquent, l'invention vise à porter remède aux inconvénients de l'art antérieur en proposant une nouvelle unité de mélange qui, tout en étant facile à fabriquer, présente une compacité suffisante pour s'adapter à la plupart des robinets mitigeurs existants.

L'invention a pour objet une unité de mélange pour un robinet mitigeur selon la revendication 1.

Grâce à l'invention, les moyens thermostatiques sont disposés en biais au sein de l'unité de mélange, de sorte que la compacité de l'unité de mélange est améliorée selon l'axe principal. Cette compacité est assurée, alors même que l'on prévoit à la fois des moyens de mélange et des moyens thermostatiques visant à obturer au moins partiellement la deuxième entrée en fonction de la température du flux sortant.

Selon d'autres caractéristiques avantageuses de l'invention, prises isolément ou en combinaison :
- l'axe d'obturation forme un angle d'inclinaison non nul compris entre -45° et 45° avec le plan orthogonal ;
- l'angle d'inclinaison est compris entre -45° et -10° ou entre 10° et 45° ;
- l'unité de mélange comprend un logement, qui met en communication la sortie avec la deuxième entrée le long de l'axe d'obturation, et dans lequel au moins une partie des moyens thermostatiques est logée, de façon à obturer de manière étanche la communication entre la sortie et la deuxième entrée ;
- le logement présente une extrémité d'insertion des moyens thermostatiques en son sein, l'extrémité d'insertion étant disposée du côté de la sortie, l'unité de mélange définissant un espace de dégagement des moyens thermostatiques, par l'intermédiaire duquel les moyens thermostatiques peuvent être montés dans le logement par translation des moyens thermostatiques le long de l'axe d'obturation jusqu'à insertion d'au moins une partie des moyens thermostatiques au sein du logement par l'intermédiaire de l'extrémité d'insertion ;
- l'unité de mélange comprend une couronne d'étanchéité de l'unité de mélange avec un corps de robinet mitigeur, la couronne d'étanchéité s'étendant dans le plan orthogonal, les moyens thermostatiques étant traversés par le plan orthogonal et entourés par la couronne d'étanchéité ;
- l'unité de mélange comprend une cartouche, renfermant les moyens de mélange, et un boîtier additionnel, qui est monté en appui contre la cartouche et qui inclut les moyens thermostatiques et la couronne d'étanchéité ;
- l'unité de mélange comprend une face inférieure en surface de laquelle la première entrée et la deuxième entrée débouchent, la deuxième entrée étant prolongée, vers l'intérieur de l'unité de mélange, par un conduit en chicane comprenant une partie obturable par l'obturateur, la partie obturable s'étendant sensiblement de façon coaxiale avec l'axe d'obturation, le conduit en chicane reliant la deuxième entrée aux moyens de mélange ;
- l'ensemble de disques de mélange comprend un disque supérieur et un disque intermédiaire, l'organe de commande actionnant le disque supérieur et le disque intermédiaire : en rotation, autour de l'axe principal ou autour d'un premier axe, qui est parallèle à l'axe principal, pour régler le rapport entre le débit du premier flux entrant et du deuxième flux entrant et donc la température du flux sortant ; et en translation, selon un deuxième axe, qui est orthogonal à l'axe principal, pour faire varier équitablement le débit du premier flux entrant et du deuxième flux entrant, pour régler le débit du flux sortant ;
- l'organe de commande comprend un levier permettant de commander à la fois le débit et la température du flux sortant par réglage des débits du premier flux entrant et du deuxième flux entrant, le levier étant : pivotant autour de l'axe principal pour faire varier la température du flux sortant ; et pivotant autour d'un troisième axe qui est orthogonal à l'axe principal pour régler le débit du flux sortant ; et
- le premier flux entrant provenant de la première entrée et le deuxième flux entrant provenant de la deuxième entrée sont mis en contact au cours de leur passage au sein des moyens de mélange pour être mélangés et former le flux sortant, le flux sortant étant alors évacué via la sortie.

L'invention concerne également un robinet mitigeur équipé d'une unité de mélange telle que définie ci-avant.

L'invention sera mieux comprise à la lecture de la description qui va suivre, donnée uniquement à titre d'exemple non limitatif et faite en se référant aux dessins dans lesquels :
- les figures 1 et 2 sont des coupes longitudinales d'un robinet mitigeur comprenant une unité de mélange selon un premier mode de réalisation conforme à l'invention ;
- la figure 3 est une vue d'un détail de la figure 1, à plus grande échelle, selon le cadre III ;
- la figure 4 est une vue en perspective du dessous de l'unité de mélange des figures 1 à 3, sur laquelle sont représentés des plans I-I et II-II correspondent aux plans de coupe respectives des figures 1 et 2 ;
- la figure 5 est une vue similaire à celle de la figure 4 dans laquelle un boîtier additionnel de l'unité de mélange est omis ; et
- la figure 6 est une vue, similaire à celle de la figure 1, d'un robinet mitigeur comprenant une unité de mélange selon un deuxième mode de réalisation conforme à l'invention.

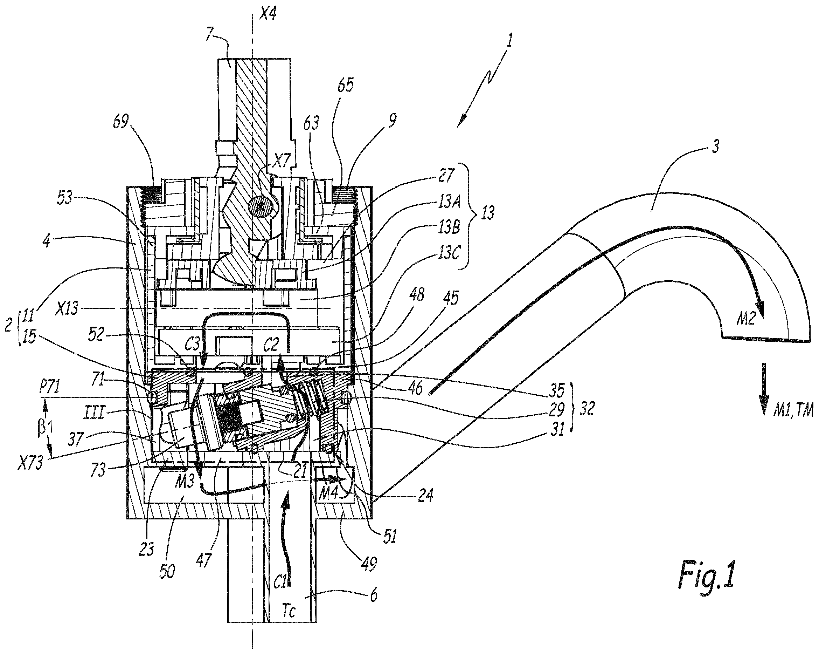

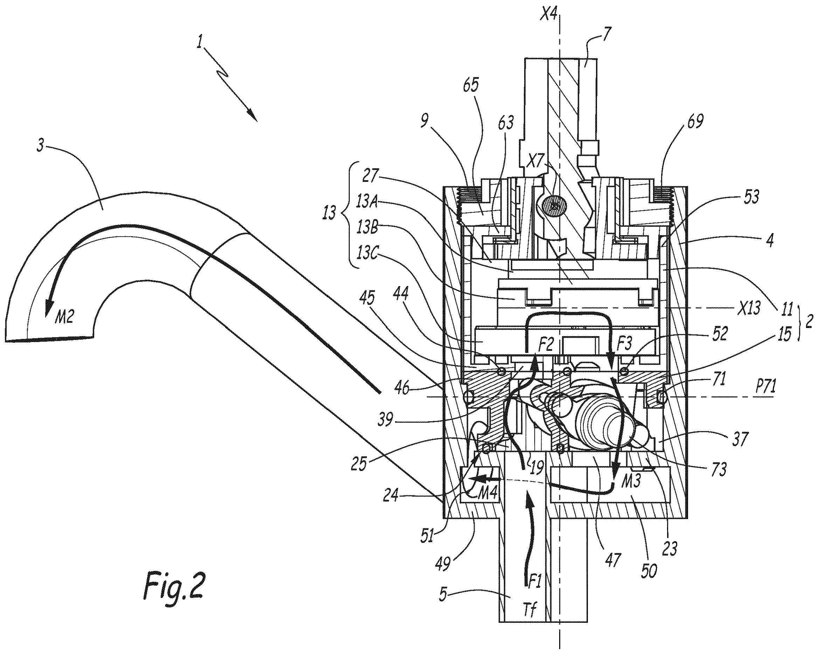

Les figures 1 et 2 illustrent un robinet mitigeur 1 dans lequel est insérée une unité de mélange 2. Le robinet mitigeur 1 est préférentiellement conçu pour être installé sur un bac du genre évier ou douche, ou plus généralement au sein d'une installation sanitaire. Le robinet mitigeur 1 comprend, de manière classique, un bec 3 à partir duquel un flux d'eau mitigé illustré par la flèche M1 est destiné à être émis. Le robinet 1 comprend également un corps 4, lequel forme un cylindre creux définissant un axe principal X4 qui est destiné à être disposé verticalement lorsque le robinet est monté sur l'installation sanitaire.

Par commodité, la suite de la description est orientée par rapport à l'axe principal X4, en considérant que les termes « supérieur » et « haut » correspondent à une direction axiale tournée vers la partie haute de la figure 1, tandis que les termes « inférieur » et « bas » correspondent à une direction axiale de sens opposé.

En variante non illustrée, l'axe X4 est disposé selon une direction différente de la verticale et est par exemple horizontal.

Le bec 3 forme un conduit courbé qui s'étend à partir du corps 4 à l'oblique par rapport à l'axe principal X4, vers le haut, la courbure du bec 3 permettant d'orienter le flux d'eau mitigé M1 vers le bas. Le flux d'eau mitigé progresse ainsi à l'oblique vers le haut au sein du bec selon la flèche M2 jusqu'à l'extrémité libre de ce dernier.

Le robinet mitigeur 1 comprend également une arrivée d'eau froide 5 qui est visible à la figure 2, et une arrivée d'eau chaude 6 qui est visible à la figure 1, qui sont connectées au corps 4 au niveau d'une extrémité basse de ce dernier. L'arrivée d'eau froide 5 et l'arrivée d'eau chaude 6 sont prévues pour être connectées à des moyens d'alimentation en eau classiques de l'installation sanitaire, lesquels ne sont pas détaillés dans la présente description. L'eau froide progresse vers le haut dans l'arrivée 5, selon la flèche F1, à une température Tf. L'eau chaude progresse quant à elle vers le haut dans l'arrivée 6, selon la flèche C1, à une température Tc. Les flux C1 et F1 sont mélangés au sein du robinet mitigeur 1 pour former le flux M1, d'une température T_{M} comprise entre Tf et Tc, et de débit additionné des flux C1 et F1.

L'unité de mélange 2 est logée au sein du corps 4, en étant insérée dans ce dernier par l'intermédiaire d'une ouverture supérieure 9 du corps 4 le long de l'axe principal X4. C'est dans cette unité de mélange 2 qu'est effectué le mélange des flux entrants F1 et C1 pour former le flux sortant M1.

L'unité de mélange 2 présente une forme générale cylindrique coaxiale avec l'axe principal X4. L'unité de mélange 2 comprend d'une part une cartouche 11, qui renferme des moyens 13 de mélange du premier flux entrant F1 et du deuxième flux entrant C1 pour former le flux sortant M1, et d'autre part un boîtier additionnel 15 qui comprend une paroi supérieure 46 par l'intermédiaire de laquelle ledit boîtier 15 est monté en appui vers le haut contre une paroi inférieure 45 de la cartouche 11 le long de l'axe principal X4. Ainsi, la cartouche 11 est située en partie supérieure du corps 4, au-dessus du boîtier additionnel 15 qui est situé en partie inférieure du corps 4.

Le boîtier additionnel 15 présente une face inférieure 24 par l'intermédiaire de laquelle il est lui-même en appui vers le bas contre une paroi d'appui 23 du corps 4. Cette dernière est sensiblement discoïde et s'étend radialement par rapport à l'axe principal X4. Les arrivées 5 et 6 des flux entrants F1 et C1 traversent la paroi d'appui 23 pour alimenter le boîtier additionnel 15 par la face inférieure 24. En pratique, les arrivées 5 et 6 sont respectivement connectées, de façon étanche, à une première entrée 19 du premier flux entrant F1, et à une deuxième entrée 21 du deuxième flux entrant C1 débouchant en surface de la face inférieure 24.

Tel qu'illustré à la figure 2, le premier flux entrant progresse selon la flèche F1 jusqu'à la première entrée 19 et poursuit sa course au travers du boîtier additionnel 15 de bas en haut selon la flèche F2 dans un conduit traversant 25 du boîtier additionnel 15 s'étendant parallèlement à l'axe principal X4 à partir de la première entrée 19. Le conduit traversant 25 guide le premier flux entrant F2 jusqu'à une chambre de mélange 27 de la cartouche 11, en traversant la paroi supérieure 46 du boîtier 15. La chambre de mélange 27 appartient aux moyens de mélange 13. Parallèlement, tel qu'illustré à la figure 1, le deuxième flux entrant entre dans le boîtier additionnel 15 par l'intermédiaire de la deuxième entrée 21, et circule de bas en haut selon la flèche C2 au travers du boîtier additionnel 15 dans un conduit en chicane 32 qui s'étend généralement de bas en haut à partir de la deuxième entrée 21. En l'espèce ce conduit en chicane 32 comprend une première partie 31 sensiblement parallèle à l'axe principal X4 et s'étendant à partir de la deuxième entrée 21. Le conduit en chicane 32 comprend ensuite une partie obturable 29, par un obturateur 87 qui est décrit plus en détail ci-après, la partie obturable 29 prolongeant la première partie 31. Enfin, le conduit en chicane 32 comprend une troisième partie 35 sensiblement parallèle à l'axe principal X4 conduisant le deuxième flux entrant C2 jusqu'à la cartouche 11 et prolongeant la partie obturable 29. La troisième partie 35 traverse la paroi supérieure 46 du boîtier 15. La partie obturable 29 s'étend de façon oblique par rapport à la première partie 31 et à la troisième partie 35 de sorte que le conduit en chicane 32 forme un « S ». La troisième partie 35 débouche dans la chambre de mélange 27. Ainsi, les deux flux entrant F2 et C2 sont admis au sein de la chambre de mélange 27 de la cartouche 11 pour y être mélangés et former un flux sortant M3 destiné à former le flux M1.

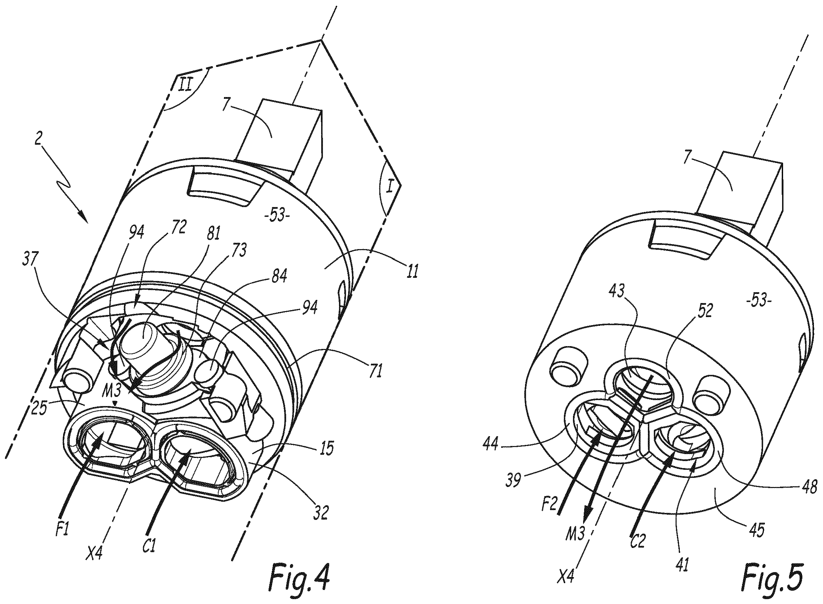

La chambre de mélange 27 comprend une entrée 39 pour le premier flux F2, une deuxième entrée 41 pour le deuxième flux C2, ainsi qu'une sortie 43 pour le flux sortant M3, comme cela est notamment visible sur la figure 5, sur laquelle le boîtier additionnel 15 est omis. Les entrées 39, 41 et la sortie 43 débouchent en surface de la paroi inférieure 45 de la cartouche 11. En l'espèce, la paroi inférieure 45 est de forme généralement discoïde centrée sur l'axe principal X4, les entrées 39 et 41 ainsi que la sortie 43 étant réparties autour de l'axe principal X4. Les entrées 39, 41 et la sortie 43 sont respectivement entourées par des joints d'étanchéité 44, 48 et 52, montés en surface de la paroi inférieure 45, afin d'assurer l'étanchéité de l'assemblage entre la cartouche 11 et le boîtier additionnel, par écrasement des joints 44, 48 et 52 contre la paroi supérieure 46 du boîtier 15. Selon le sens de circulation des flux, la première entrée 39 et la deuxième entrée 41 sont en amont des moyens de mélange 13, et la sortie 43 est en aval des moyens de mélange.

Dans l'exemple illustré, les moyens de mélange 13 comprennent un ensemble de disques de mélange 13A, 13B et 13C, qui sont contenus dans la chambre de mélange 27, comme cela est visible sur les figures 1 et 2. Les disques de mélange 13A, 13B et 13C sont en contact surfaciques les uns avec les autres et s'étendent dans des plans orthogonaux à l'axe principal X4. L'ensemble de disques de mélange comprend un disque supérieur 13A, un disque intermédiaire 13B et un disque inférieur 13C, les disques supérieur 13A et intermédiaire 13B étant mobiles par rapport au disque 13C qui est fixe, le disque intermédiaire 13B étant en contact glissant et étanche avec le disque 13C. Les disques intermédiaire 13B et inférieur 13C comprennent un système de canaux et d'ouïes, non représenté, qui est connecté aux entrées 39 et 41 ainsi qu'à la sortie 43 et qui, en fonction de la position relative des disques 13B et 13C, règle le débit respectif des flux entrants F2 et C2 admis au sein de l'ensemble de disques par les entrées 39 et 41. Tel que représentés par les flèches F3 et C3, les flux entrants circulent dans le système de canaux et d'ouïes et passent d'abord au travers du disque inférieur 13C, puis dans le disque intermédiaire 13B. Les flux entrants F3 et C3 circulent ensuite à nouveau au travers du disque inférieur 13C de haut en bas. Au cours de leur passage au sein des disques 13A, 13B et 13C, où les flux entrants F3 et C3 sont mis en contact pour être mélangés et former le flux sortant M3. Le flux sortant M3 est à température T_{M}, le rapport des débits des flux entrants F3 et C3 permettant de régler la température T_{M}, et la valeur des débits des flux entrants F3 et C3 permettant de régler le débit du flux sortant M3. En pratique, la section de passage des flux entrants F3 et C3 varie en fonction de la position relative des disques 13B et 13C, par mise en communication des canaux et des ouïes susmentionnés. Les disques céramiques et leur système de canaux ne sont pas décrits plus en détails car ils constituent des moyens de mélange bien connus en tant que tels, et décrits par exemple dans FR-B1-2 876 433. On comprend également que, même si l'on préfère la mise en œuvre d'une chambre de mélange à disques céramiques, tous moyens de mélange connus et habituellement mis en œuvre dans les cartouches pour robinets mitigeurs peuvent être utilisés à la place.

Le flux sortant M3 formé par mélange au sein de la chambre de mélange 27 est alors évacué hors de cette dernière via la sortie 43, et hors de la cartouche 11, jusque dans une chambre de sortie 37 du robinet mitigeur 1, conduisant le flux sortant M3 de haut en bas jusqu'à une sortie 47 ménagée au travers de la paroi d'appui 23. Les arrivées 5 et 6 et la sortie 47 sont réparties autour de l'axe principal X4. Le boîtier additionnel 15 comprend une couronne d'étanchéité 71 de forme circulaire qui est centrée sur l'axe principal X4. En l'espèce, la couronne d'étanchéité 71 s'étend dans un plan orthogonal P71 par rapport à l'axe X4, en faisant saillie de façon centrifuge par rapport à l'axe X4, à partir de la paroi supérieure 46 du boîtier 15 de manière à être en contact étanche le corps 4. En l'espèce, la couronne d'étanchéité comprend une gorge circulaire ouverte radialement vers l'extérieur, au sein de laquelle est ménagé un joint torique écrasé au contact du corps 4, comme illustré aux figures. La couronne d'étanchéité 71 délimite ainsi une partie supérieure de la chambre de sortie 37, cette dernière étant également délimitée latéralement par la paroi du corps 4, et en bas par la paroi d'appui 23. Comme cela est visible à la figure 4, la chambre de sortie 37, le conduit traversant 25 et le conduit en chicane 32 sont répartis régulièrement autour de l'axe principal X4. Tel qu'illustré aux figures 1 et 2, le flux sortant M3 est ainsi déversé au sein d'une chambre basse 50, du corps 4 par l'intermédiaire de la sortie 47. La chambre basse 50 est délimitée en haut par la paroi 23, latéralement par le corps 4 et en bas par un fond 49 du robinet mitigeur 1. Le fond 49 est sensiblement discoïde et orthogonal à l'axe principal X4, et ferme le corps 4 à l'extrémité inférieure de ce dernier. Dans la chambre basse 50, le flux sortant M3 est conduit, selon la flèche M4, jusqu'au bec 3, par l'intermédiaire d'une ouverture d'accès 51 ménagée dans la paroi du corps 4 radialement par rapport à l'axe principal X4, mettant en communication la chambre basse 50 avec le bec 3. Dans le bec 3, le flux sortant M4 devient le flux sortant M2, puis le flux sortant M1, mentionnés dans ce qui précède.

L'unité de mélange 2 comprend en outre un levier 7 qui est monté mobile au sommet de la cartouche 11, de manière à dépasser du corps 4 par l'intermédiaire de l'ouverture supérieure 9, pour permettre à un utilisateur d'actionner le levier 7. L'actionnement du levier 7 permet de commander les moyens de mélange 13, et en particulier de mouvoir les disques supérieur 13A et intermédiaire 13B en rotation autour d'un axe parallèle à l'axe principal X4, ou autour de l'axe X4 lui-même, et en translation selon un axe X13 qui est orthogonal à l'axe principal X4. De manière générale, le levier 7 forme un organe de commande pour actionner au moins l'un des disques 13A, 13B et 13C, et ainsi commander le débit respectif du premier flux entrant F1 et du deuxième flux entrant C1. Ainsi, l'organe de commande 7 permet de régler à la fois la température et le débit du flux sortant M1 par réglage de la position relative des disques de l'ensemble de disques 13A, 13B et 13C. Le robinet mitigeur 1 et la cartouche 11 peuvent ainsi être qualifiés de « monocommandes » dans la mesure où le levier 7 permet de commander à la fois le débit et la température du flux sortant M1 par réglage des débits des flux entrants F1 et C1. En pratique, le levier 7 est :
- pivotant autour de l'axe principal X4, ce qui entraîne une rotation des disques supérieur 13A et 13B autour de ce même axe, afin de régler le rapport entre le débit du premier et du deuxième flux entrants F1 et C1 et donc la température du flux sortant M1, et
- pivotant autour d'un deuxième axe X7 qui est orthogonal à l'axe principal X4 afin de translater les disques supérieurs 13A et 13B le long de l'axe X13 et de faire varier équitablement le débit du premier et du deuxième flux, pour régler le débit du flux sortant.

Le levier 7 est lié à l'ensemble de disques 13A, 13B et 13C, c'est-à-dire aux moyens de mélange 13, par un mécanisme de manœuvre qui n'est pas décrit plus en détail, dans la mesure où il est connu en tant que tel.

La cartouche 11 comprend un capot 53, qui forme une paroi d'enveloppe extérieure de la cartouche 11, sensiblement cylindrique à base circulaire autour de l'axe principal X4. Le capot 53 renferme les moyens de mélange 13, en délimitant latéralement la chambre 27. Le capot 53 renferme également la base du levier 7, la cartouche comprenant une couronne 63, rapportée sur une extrémité supérieure du capot 53, par l'intermédiaire de laquelle un écrou 65, centré autour de l'axe principal X4, plaque l'unité de mélange 2 contre la paroi d'appui 23. En pratique, l'écrou 65 comporte un filetage extérieur qui est vissé dans un filetage intérieur 69 de l'ouverture supérieure 9 du corps 4, le filetage 69 étant centré sur l'axe X4.

L'unité de mélange 2 comprend également des moyens thermostatiques, visibles notamment sur la figure 1, qui comprennent en premier lieu un élément thermostatique 73, s'étendant selon un axe d'obturation X73 compris dans le plan de la figure 1. L'axe d'obturation X73 et le plan orthogonal P71 sont sécants. En d'autres termes, l'axe d'obturation X73 est incliné par rapport à ce plan P71 et le traverse. La partie obturable 29 du conduit en chicane 32 s'étend sensiblement de façon coaxiale avec l'axe d'obturation X73. De préférence, l'axe d'obturation X73 forme un angle d'inclinaison β1 compris entre 10° et 45° avec le plan orthogonal P71, et de préférence égal à 13°.

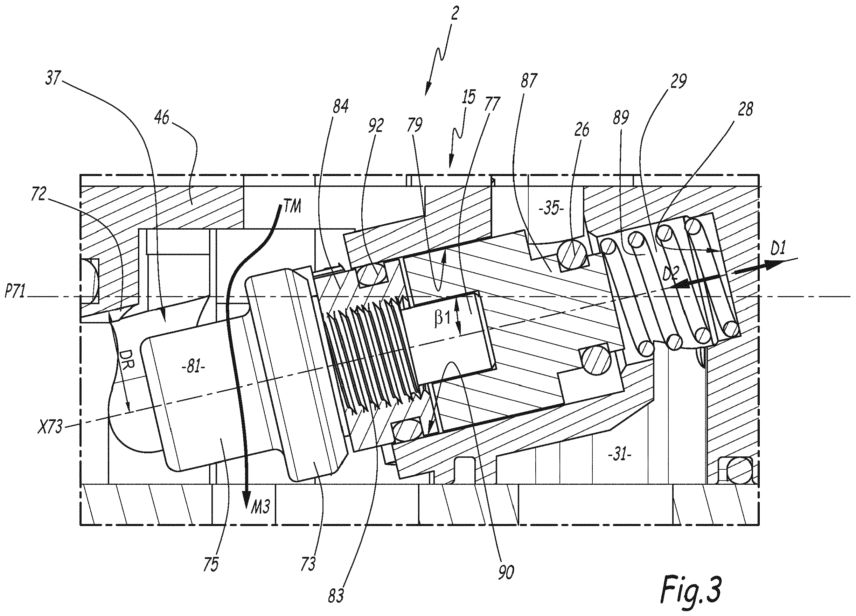

Comme cela est notamment visible à la figure 3, le long de l'axe d'obturation X73, l'élément thermostatique 73 inclut une partie thermosensible 75 montée dans un logement 79 du boîtier additionnel 15. Le logement 79 est un conduit coaxial avec l'axe d'obturation X73, et qui est ménagé dans le boîtier additionnel 15 de façon à relier la chambre de sortie 37 et le conduit en chicane 32. Le logement 79 met ainsi en communication la sortie 47 avec la deuxième entrée 21.

La partie thermosensible 75 forme une partie fixe de l'élément thermostatique 73 et comprend en particulier, le long de l'axe d'obturation X73, une coupelle 81 qui dépasse du logement 79 et qui s'étend dans le passage du flux sortant M3, à la sortie 47. La coupelle 81 présente une forme généralement cylindrique à base circulaire centrée sur l'axe d'obturation X73, et renferme un corps thermo-dilatable qui est par exemple une cire adaptée. La coupelle 81 étant en contact avec le flux sortant M3, le corps thermo-dilatable se dilate et se contracte en fonction de la température T_{M} du flux sortant M3.

La partie thermosensible 75 comprend également un guide 83, qui prolonge la coupelle 81 le long de l'axe d'obturation X73, et par l'intermédiaire duquel la partie thermosensible 75 est montée dans le logement 79. Le guide 83 présente une forme de vis, avec un filetage extérieur, autour de l'axe d'obturation X73, et s'étend au moins en partie au sein du logement 79. En l'espèce, le guide 83 est vissé au sein d'une bague de support 84 pourvue d'un filetage intérieur, coaxial avec l'axe X73, la bague de support 84 étant elle-même fixée au sein d'une extrémité 90 du logement 79. L'extrémité 90 forme une partie extrémale du logement 79 s'étendant du côté de la sortie 47, en contact avec la chambre de sortie 37. La bague de support 84 est partiellement insérée dans l'extrémité 90, et présente une garniture d'étanchéité 92 avec le logement 79, de façon à obturer ce dernier de façon étanche et ainsi prévenir tout transfert d'eau du deuxième flux C2 dans la sortie 47 via le logement 79. La bague 84 de support est fixée au logement 79 à l'aide d'éléments de fixation 94 schématisés sur la figure 4, du genre vis. Les éléments de fixation 94 sont implantés dans une paroi de la chambre 37, laquelle forme la périphérie de l'extrémité 90. L'élément thermostatique 73 est ainsi logé dans le logement 79 de façon à obturer de manière étanche la communication entre la sortie 47 et la deuxième entrée 21.

L'élément thermostatique 73 comprend également une partie mobile 77, qui forme un piston cylindrique coaxial avec l'axe d'obturation X73. La partie mobile 77 est montée au sein du guide 83, de façon à pouvoir translater par rapport à la partie thermosensible 75 à l'écart de la partie thermosensible 75, en direction du conduit en chicane 32, selon l'axe d'obturation X73 sous l'action du corps thermo-dilatable contenu dans la coupelle 81.

Un obturateur 87, appartenant à l'élément thermostatique 73, est prévu au sein de la partie obturable 29, et est conçu pour être déplacé en translation selon l'axe d'obturation X73 par la partie mobile 77. L'obturateur 87 est agencé par rapport à la partie mobile 77 de manière à ce que cette dernière puisse pousser l'obturateur 87 jusqu'à une position d'obturation de la deuxième entrée 21, dans laquelle une garniture d'étanchéité 26 de l'obturateur 87, formée par exemple par un joint torique externe, vient obturer la partie obturable 29. En l'espèce, la partie mobile 77 est en contact avec l'obturateur 87 de façon à pousser ce dernier à l'écart de la partie thermosensible 75 dans une direction D1 parallèle à l'axe X73, sous l'action du corps thermodilatable contenu dans la coupelle 81. Du fait de l'inclinaison de l'axe X73 par rapport au plan P71, l'élément thermostatique 73 est plus éloigné des moyens de mélange 13 que ne l'est l'obturateur 87.

L'obturateur 87 est monté en compression entre l'extrémité libre de la partie mobile 77 et un ressort de rappel 89. Ce dernier est lui-même monté en compression entre l'obturateur 87 et une paroi opposée 28 de la partie obturable 29 du conduit en chicane 32. La paroi opposée 28 s'étend dans un plan orthogonal par rapport à l'axe X73. Le ressort de rappel 89 est donc un ressort de compression, conçu pour rappeler l'obturateur 87 dans une direction D2 opposée à D1, jusqu'à une position d'ouverture du conduit en chicane 32 et donc de la deuxième entrée 21.

L'obturateur 87 est donc configuré pour obturer la deuxième entrée 21 par obturation de la partie obturable 29, selon un degré d'obturation variable en fonction de la dilatation du corps thermo-dilatable, et donc de la température T_{M}, pour faire varier le débit du deuxième flux entrant C2 en conséquence. Lorsque la température T_{M} atteint un seuil prédéterminé, par exemple 50°C, le flux C2 est totalement, ou au moins partiellement, interrompu par obturation de la deuxième entrée 21. Les moyens thermostatiques, et en particulier l'obturateur 87, constituent un moyen séparé des moyens de mélange 13 décrits ci-avant. Les moyens thermostatiques ont avantageusement une fonction sécuritaire, anti-brûlure, réduisant ou coupant le flux entrant C2 lorsque le flux sortant M3 est de température trop élevée.

L'unité de mélange 2 est configurée pour être insérée dans le corps 4 du robinet mitigeur 1 par l'intermédiaire de l'ouverture supérieure 9. Avant cette étape d'insertion de l'unité 2, la chambre de sortie 37 est ouverte et forme un espace de dégagement, du fait de l'absence du corps 4 du robinet mitigeur 1. Le montage de l'élément thermostatique 73 peut donc être effectué par insertion de ce dernier dans le logement 79 selon la direction D1, par l'extrémité 90, qui constitue dès lors une «extrémité d'insertion ». De façon préférentielle, l'espace de dégagement de la chambre 37 est conformé pour que l'élément thermostatique 73, l'obturateur 87 et le ressort 89 puissent être placés dans cet espace de dégagement, le long de l'axe X73, puis être poussés dans la direction D1 afin d'être insérés dans le logement 79 par l'extrémité d'insertion 90, sans nécessiter une séparation du boîtier additionnel 15 et de la cartouche 11. Cette configuration de la chambre 37 est rendue possible du fait de l'inclinaison de l'axe X73 par rapport au plan P71, grâce à laquelle les moyens thermostatiques passent à côté de la couronne d'étanchéité 71 lorsqu'ils sont mis en translation le long de l'axe X73 dans la chambre 37. Sans cette inclinaison de l'axe X73, la couronne d'étanchéité 71 s'opposerait au libre débattement des moyens thermostatiques susmentionnés le long de l'axe X73 au sein de la chambre 37. On comprend que l'angle d'inclinaison β1 de l'axe X73 par rapport au plan P71 est choisi de façon à ce que, les moyens d'étanchéité n'interfèrent pas avec ladite couronne d'étanchéité 71. Une encoche 72, visible sur les figures 3 et 4, est ménagée dans la couronne d'étanchéité 71 en un point de la circonférence de cette dernière. Cette encoche 72 présente un profil cylindrique coaxial avec l'axe X73, et présente un rayon DR. Le rayon DR est supérieur à l'encombrement radial, c'est-à-dire au rayon maximal par rapport à l'axe X73, des moyens thermostatiques. Lorsque les moyens thermostatiques susmentionnés sont montés au sein du logement 79, ils sont traversés par le plan P71 et entourés par la couronne d'étanchéité 71. De manière générale, pour permettre le dégagement des moyens thermostatiques, on prévoit que l'espace de dégagement s'étende au moins sur un cylindre coaxial avec l'axe X73, débutant au niveau de l'extrémité d'insertion 90 en direction de la chambre de sortie 37 et présentant un rayon égal au rayon DR.

Enfin, l'inclinaison de l'axe X73 implique que la couronne d'étanchéité 71 peut être placée à une distance relativement faible de la face inférieure 24, en dépit de l'encombrement des moyens thermostatiques et des contraintes liées à leur montage au sein de l'unité de mélange 2. Ainsi, cette unité de mélange 2 est particulièrement compacte et est adaptée à la géométrie des robinets mitigeurs existants.

En variante non illustrée, l'inclinaison de l'axe X73 par rapport au plan P71 est telle que l'élément thermostatique 73 est moins éloigné des moyens de mélange 13 que ne l'est l'obturateur 87. Dans ce cas, l'angle β1 vaut par exemple entre -45° et -10°, préférentiellement -13°. En d'autres termes, une disposition inverse à celle représentée sur les figures 1 à 5 est adoptée pour l'élément thermostatique 73 et l'obturateur 87, de sorte que le plan P71 et l'axe X73 sont sécants. Ainsi, dans cette variante, l'inclinaison de l'axe X73 par rapport au plan P71 implique également que la couronne d'étanchéité 71 peut être placée à une distance relativement faible de la face inférieure 24.

De manière générale, l'angle β1 est préférentiellement compris entre -45° et 45°, tout en étant non nul.

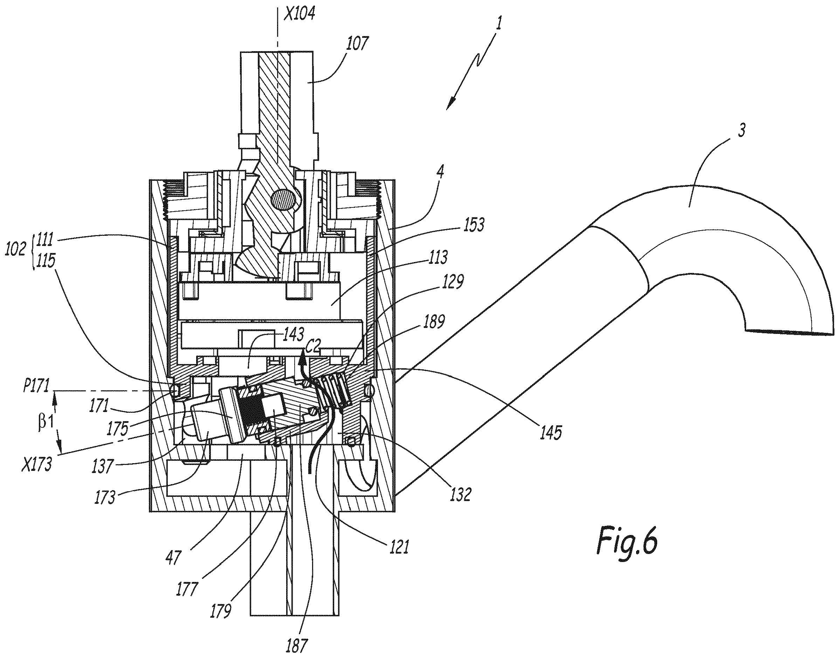

La figure 6 illustre une unité de mélange 102 conforme à un deuxième mode de réalisation et qui présente des caractéristiques similaires avec l'unité de mélange 2 du premier mode de réalisation décrit ci-avant, illustrée aux figures 1 à 5, ces caractéristiques similaires étant désignées par un tracé identique sur le dessin, et/ou des numéros de référence augmentés de 100. La description qui suit est donc centrée sur les différences entre le premier et le deuxième mode de réalisation.

Tout comme l'unité de mélange 2, l'unité de mélange 102 comprend une première entrée pour un premier flux entrant, non visibles sur la figure 6, ainsi que des entrées 121 et 141 pour un deuxième flux entrant C2, un conduit en chicane 132, avec une partie obturable 129, des moyens de mélange 113 pour former un flux sortant M3, une sortie 143 avec une chambre de sortie 137 et un logement 179. L'unité de mélange 102 comprend également un organe de commande 107, des moyens thermostatiques comprenant d'une part un élément thermostatique 173 incluant à la fois une partie thermosensible 175 et une partie mobile 177, et d'autre part un obturateur 187, avec un ressort de rappel 189. La partie mobile 177 est mobile en translation selon un axe d'obturation X173, sécant par rapport à un plan P171 orthogonal à un axe principal X104 défini par la forme générale cylindrique de l'unité de mélange 102. Le plan P171 et l'axe X173 définissent un angle d'inclinaison β101. L'unité de mélange 102 comprend une couronne d'étanchéité 171 avec un corps 4 du robinet mitigeur 1, la couronne d'étanchéité s'étendant dans le plan P171 en faisant saillie de façon centrifuge par rapport à l'axe principal X104.

L'unité de mélange 102 est intégrée dans le même corps 4 de robinet mitigeur 1 que celui des figures 1 à 5. L'unité de mélange 102 comprend une cartouche 111 et un boîtier additionnel 115. Contrairement à l'unité de mélange 2, le boîtier additionnel 115 de l'unité de mélange 102 est venu de matière avec la cartouche 111, ou est pour le moins fixé à demeure sur cette cartouche 111. Ainsi, l'unité de mélange 102 comprend une unique pièce 145 remplaçant à la fois une paroi inférieure 45 et la paroi supérieure 46 de l'unité de mélange 2. La pièce 145 forme également, d'un seul tenant, un capot 153 de la cartouche 111, la couronne d'étanchéité 171, ainsi que le conduit en chicane 132, la chambre de sortie 137 et le conduit traversant, non visible sur la figure 6. L'unité de mélange 102 est ainsi particulièrement facile à fabriquer, dans la mesure où il n'est pas nécessaire de procéder à l'assemblage d'un boîtier additionnel sur une cartouche, ce qui dispense de l'utilisation de joints d'étanchéités du genre des joints 44, 48 et 52 de l'unité de mélange 2. Cette pièce 145 peut être obtenue par exemple par moulage. L'assemblage des moyens thermostatiques au sein de l'unité de mélange 102 peut être effectué comme dans le cas de l'unité 2, grâce à l'inclinaison de l'axe X173, ce qui permet de ménager un espace de dégagement sous la couronne d'étanchéité 171.

Dans ce qui précède, on met en œuvre des flux d'eau. Toutefois, d'autres fluides peuvent être utilisés en lieu et place de l'eau, de préférence des flux de fluides liquides. De manière générale, l'arrivée 5 correspond à une arrivée d'un premier flux entrant F1 de fluide présentant une première température Tf, alors que l'arrivée 6 correspond à une arrivée d'un deuxième flux entrant C1 de fluide présentant une deuxième température Tc qui est supérieure à la première température Tf. Les fluides du premier flux entrant F1 et du deuxième flux entrant C1 sont préférentiellement identiques et liquides, mais peuvent toutefois être de nature différente. L'eau s'échappant du bec 3 correspond ainsi à un flux sortant M1 de fluide, qui est formé par mélange des premier et deuxième flux entrant F1 et C1 au sein du robinet mitigeur 1.

Les modes de réalisations et variantes définis ci-dessus pourront être combinés pour créer de nouveaux modes de réalisation.

## Revendications

1. Unité de mélange (2; 102) pour un robinet mitigeur (1), l'unité de mélange (2 ; 102) présentant une forme générale cylindrique définissant un axe principal (X4) de l'unité de mélange, l'unité de mélange comprenant :
- une première entrée (39) d'un premier flux entrant (F1) de fluide présentant une première température (Tf),
- une deuxième entrée (41; 141) d'un deuxième flux entrant (C1) de fluide présentant une deuxième température (Tc) supérieure à la première température,
- une sortie (43; 143) pour un flux sortant (M3),
- un organe de commande (7 ; 107),
- des moyens de mélange (13 ; 113) des premier et deuxième flux entrants pour former le flux sortant, les moyens de mélange (13 ; 113) incluant une chambre de mélange (27) renfermant un ensemble de disques de mélange (13A, 13B, 13C), qui s'étendent dans des plans orthogonaux à l'axe principal (X4), qui sont en céramique, et dont au moins un est actionné par l'organe de commande, pour commander le débit respectif du premier flux entrant (F1) et du deuxième flux entrant (C1) et ainsi régler à la fois la température et le débit du flux sortant (M3), et
- des moyens thermostatiques qui comprennent :
∘ un élément thermostatique (73; 173) incluant à la fois une partie thermosensible (75; 175) disposée au moins partiellement à la sortie, et une partie mobile (77; 177) en translation par rapport à la partie thermosensible selon un axe d'obturation (X73; X173), et
∘ un obturateur (87; 187) de la deuxième entrée lié à la partie mobile en translation selon l'axe d'obturation, la deuxième entrée étant en amont des moyens de mélange (13A, 13B, 13C),
l'unité de mélange (2; 102) étant **caractérisée en ce que** :
- un plan orthogonal (P71; P171) est orthogonal à l'axe principal (X4) ;
- le plan orthogonal (P71 ; P171) et l'axe d'obturation (X73; X173) sont sécants ;
- l'axe d'obturation est incliné par rapport audit plan orthogonal et traverse ledit plan orthogonal.

2. Unité de mélange (2; 102) selon la revendication 1, **caractérisée en ce que** l'axe d'obturation (X73; X173) forme un angle d'inclinaison (β1; β101) non nul compris entre -45° et 45° avec le plan orthogonal (P71; P171).

3. Unité de mélange (2 ; 102) selon la revendication 2, **caractérisée en ce que** l'angle d'inclinaison (β1; β101) est compris entre -45° et -10° ou entre 10° et 45°.

4. Unité de mélange (2; 102) selon l'une quelconque des revendications précédentes, **caractérisée en ce que** l'unité de mélange comprend un logement (79 ; 179), qui met en communication la sortie (43; 143) avec la deuxième entrée (41; 141) le long de l'axe d'obturation (X73; X173), et dans lequel au moins une partie des moyens thermostatiques est logée, de façon à obturer de manière étanche la communication entre la sortie et la deuxième entrée.

5. Unité de mélange (2; 102) selon la revendication précédente, **caractérisée en ce que** le logement (79; 179) présente une extrémité d'insertion (90) des moyens thermostatiques en son sein, l'extrémité d'insertion étant disposée du côté de la sortie (43; 143), l'unité de mélange définissant un espace de dégagement (37 ; 137) des moyens thermostatiques, par l'intermédiaire duquel les moyens thermostatiques peuvent être montés dans le logement par translation des moyens thermostatiques le long de l'axe d'obturation (X73; X173) jusqu'à insertion d'au moins une partie des moyens thermostatiques au sein du logement par l'intermédiaire de l'extrémité d'insertion.

6. Unité de mélange (2; 102) selon l'une quelconque des revendications précédentes, **caractérisée en ce que** l'unité de mélange comprend une couronne d'étanchéité (71; 171) de l'unité de mélange avec un corps de robinet mitigeur (1), la couronne d'étanchéité s'étendant dans le plan orthogonal (P71; P171), les moyens thermostatiques étant traversés par le plan orthogonal et entourés par la couronne d'étanchéité.

7. Unité de mélange (2) selon la revendication précédente, **caractérisée en ce que** l'unité de mélange comprend une cartouche (11), renfermant les moyens de mélange (13), et un boîtier additionnel (15), qui est monté en appui contre la cartouche et qui inclut les moyens thermostatiques et la couronne d'étanchéité (71).

8. Unité de mélange (2; 102) selon l'une quelconque des revendications précédentes, **caractérisée en ce que** l'unité de mélange comprend une face inférieure (24) en surface de laquelle la première entrée (39) et la deuxième entrée (41; 141) débouchent, la deuxième entrée étant prolongée, vers l'intérieur de l'unité de mélange, par un conduit en chicane (32 ; 132) comprenant une partie obturable (29 ; 129) par l'obturateur (87; 187), la partie obturable s'étendant sensiblement de façon coaxiale avec l'axe d'obturation (X73; X173), le conduit en chicane reliant la deuxième entrée (41; 141) aux moyens de mélange (13 ; 113).

9. Unité de mélange (2; 102) selon l'une quelconque des revendications précédentes, **caractérisée en ce que** l'ensemble de disques de mélange (13A, 13B, 13C) comprend un disque supérieur (13A) et un disque intermédiaire (13B), l'organe de commande (7 ; 107) actionnant le disque supérieur et le disque intermédiaire :
- en rotation, autour de l'axe principal (X4) ou autour d'un premier axe, qui est parallèle à l'axe principal (X4), pour régler le rapport entre le débit du premier flux entrant (F1) et du deuxième flux entrant (C1) et donc la température du flux sortant (M3) ; et
- en translation, selon un deuxième axe (X13), qui est orthogonal à l'axe principal (X4), pour faire varier équitablement le débit du premier flux entrant et du deuxième flux entrant, pour régler le débit du flux sortant.

10. Unité de mélange (2; 102) selon l'une quelconque des revendications précédentes, **caractérisée en ce que** l'organe de commande (7 ; 107) comprend un levier permettant de commander à la fois le débit et la température du flux sortant (M3) par réglage des débits du premier flux entrant et du deuxième flux entrant, le levier étant :
- pivotant autour de l'axe principal (X4) pour faire varier la température du flux sortant ; et
- pivotant autour d'un troisième axe (X7) qui est orthogonal à l'axe principal (X4) pour régler le débit du flux sortant.

11. Unité de mélange (2; 102) selon l'une quelconque des revendications précédentes, **caractérisée en ce que** le premier flux entrant (F1) provenant de la première entrée (39) et le deuxième flux entrant (C1) provenant de la deuxième entrée (41 ;141) sont mis en contact au cours de leur passage au sein des moyens de mélange (13 ; 113) pour être mélangés et former le flux sortant (M3), le flux sortant étant alors évacué via la sortie (43).

12. Robinet mitigeur (1) équipé d'une unité de mélange (2 ; 102) conforme à l'une quelconque des revendications précédentes.

## Patentansprüche

1. Mischeinheit (2; 102) für eine Mischbatterie (1), wobei die Mischeinheit (2; 102) eine allgemein zylindrische Form aufweist, die eine Hauptachse (X4) der Mischeinheit definiert, wobei die Mischeinheit umfasst:
- einen ersten Einlass (39) für einen ersten Eintrittsstrom (F1) von Flüssigkeit mit einer ersten Temperatur (Tf),
- einen zweiten Einlass (41; 141) für einen zweiten Eintrittsstrom (C1) von Flüssigkeit mit einer zweiten Temperatur (Tc), die höher als die erste Temperatur ist,
- einen Auslass (43; 143) für einen Austrittsstrom (M3),
- ein Betätigungsorgan (7; 107),
- Mittel zum Mischen (13; 113) des ersten und des zweiten Eintrittsstroms zur Bildung des Austrittsstroms, wobei die Mischmittel (13; 113) eine Mischkammer (27) umfassen, die einen Satz von Mischscheiben (13A, 13B, 13C) enthält, die sich in zur Hauptachse (X4) orthogonalen Ebenen erstrecken, die aus Keramik sind und von denen mindestens eine durch das Betätigungsorgan betätigt wird, um die jeweilige Durchflussmenge des ersten Eintrittsstroms (F1) und des zweiten Eintrittsstroms (C1) zu regulieren und auf diese Weise gleichzeitig die Temperatur und die Durchflussmenge des Austrittsstroms (M3) einzustellen, und
- thermostatische Mittel, die umfassen:
o ein thermostatisches Element (73; 173), das sowohl einen temperaturempfindlichen Teil (75; 175), der zumindest teilweise am Auslass angeordnet ist, als auch einen Teil (77; 177) umfasst, der in Bezug auf den temperaturempfindlichen Teil entlang einer Absperrachse (X73; X173) parallelverschiebbar ist, und
o ein Verschlussorgan (87; 187) für den zweiten Einlass, das mit dem Teil verbunden ist, der entlang der Absperrachse parallelverschiebbar ist, wobei sich der zweite Einlass stromaufwärts der Mischmittel (13A, 13B, 13C) befindet,
wobei die Mischeinheit (2; 102) **dadurch gekennzeichnet ist, dass**:
- eine orthogonale Ebene (P71; P171) orthogonal zur Hauptachse (X4) ist;
- sich die orthogonale Ebene (P71; P171) und die Absperrachse (X73; X173) schneiden;
- die Absperrachse in Bezug auf die genannte orthogonale Ebene geneigt ist und die genannte orthogonale Ebene kreuzt.

2. Mischeinheit (2; 102) nach Anspruch 1, **dadurch gekennzeichnet, dass** die Absperrachse (X73; X173) mit der orthogonalen Ebene (P71; P171) einen von Null verschiedenen Neigungswinkel (β1; β101) zwischen -45° und 45° bildet.

3. Mischeinheit (2; 102) nach Anspruch 2, **dadurch gekennzeichnet, dass** der Neigungswinkel (β1; β101) zwischen -45° und -10° oder zwischen 10° und 45° liegt.

4. Mischeinheit (2; 102) nach einem der vorhergehenden Ansprüche, **dadurch gekennzeichnet, dass** die Mischeinheit eine Aufnahme (79; 179) umfasst, die den Auslass (43; 143) mit dem zweiten Einlass (41; 141) entlang der Absperrachse (X73; X173) verbindet und in der mindestens ein Teil der thermostatischen Mittel eingefügt ist, um die Verbindung zwischen dem Auslass und dem zweiten Einlass auf dichte Weise zu verschließen

5. Mischeinheit (2; 102) nach dem vorhergehenden Anspruch, **dadurch gekennzeichnet, dass** die Aufnahme (79; 179) ein Ende zum Einfügen (90) der thermostatischen Einrichtung in ihr Inneres aufweist, wobei das Einfügeende auf der Seite des Auslasses (43; 143) angeordnet ist, wobei die Mischeinheit einen Freiraum (37; 137) für die thermostatischen Mittel definiert, vermittels dessen die thermostatischen Mittel in der Aufnahme montiert werden können, indem die thermostatischen Mittel entlang der Absperrachse (X73; X173) parallelverschoben werden, bis zumindest ein Teil der thermostatischen Mittel durch das Einfügeende in die Aufnahme eingefügt ist.

6. Mischeinheit (2; 102) nach einem der vorhergehenden Ansprüche, **dadurch gekennzeichnet, dass** die Mischeinheit einen Dichtungsring (71; 171) der Mischeinheit mit einem Körper der Mischbatterie (1) umfasst, wobei sich der Dichtungsring in der orthogonalen Ebene (P71; P171) erstreckt, wobei die thermostatischen Mittel von der orthogonalen Ebene durchlaufen werden und vom Dichtungsring umgeben sind.

7. Mischeinheit (2) nach dem vorhergehenden Anspruch, **dadurch gekennzeichnet, dass** die Mischeinheit eine Kartusche (11), welche die Mischmittel (13) enthält, und ein zusätzliches Gehäuse (15) umfasst, das an der Kartusche anliegend montiert ist und das die thermostatischen Mittel und den Dichtungsring (71) einschließt.

8. Mischeinheit (2; 102) nach einem der vorhergehenden Ansprüche, **dadurch gekennzeichnet, dass** die Mischeinheit eine Unterseite (24) aufweist, in deren Oberfläche der erste Einlass (39) und der zweite Einlass (41; 141) münden, wobei der zweite Einlass durch einen Drosselkanal (32; 132) in das Innere der Mischeinheit verlängert ist, der einen durch das Verschlussorgan (87; 187) verschließbaren Teil (29; 129) umfasst, wobei sich der verschließbare Teil im Wesentlichen koaxial mit der Absperrachse (X73; X173) erstreckt, wobei der Drosselkanal den zweiten Einlass (41; 141) mit den Mischmitteln (13; 113) verbindet.

9. Mischeinheit (2; 102) nach einem der vorhergehenden Ansprüche, **dadurch gekennzeichnet, dass** der Satz von Mischscheiben (13A, 13B, 13C) eine obere Scheibe (13A) und eine Zwischenscheibe (13B) umfasst, wobei das Betätigungsorgan (7; 107) die obere Scheibe und die Zwischenscheibe:
- um die Hauptachse (X4) oder um eine erste Achse, die parallel zur Hauptachse (X4) ist, dreht, um das Verhältnis zwischen der Durchflussmenge des ersten Eintrittsstroms (F1) und des zweiten Eintrittsstroms (C1) und somit die Temperatur des Austrittsstroms (M3) einzustellen; und
- entlang einer zweiten Achse (X13), die orthogonal zur Hauptachse (X4) ist, parallelverschiebt, um die Durchflussmenge des ersten Eintrittsstroms und des zweiten Eintrittsstroms in gleichem Maße zu verändern, um die Durchflussmenge des Austrittsstroms einzustellen.

10. Mischeinheit (2; 102) nach einem der vorhergehenden Ansprüche, **dadurch gekennzeichnet, dass** das Betätigungsorgan (7; 107) einen Hebel umfasst, der es ermöglicht, gleichzeitig die Durchflussmenge und die Temperatur des Austrittsstroms (M3) durch Einstellen der Durchflussmengen des ersten Eintrittsstroms und des zweiten Eintrittsstroms zu regulieren, wobei der Hebel:
- um die Hauptachse (X4) schwenkbar ist, um die Temperatur des Austrittsstroms zu verändern; und
- um eine dritte Achse (X7), die orthogonal zur Hauptachse (X4) ist, schwenkbar ist, um die Durchflussmenge des Austrittsstroms einzustellen.

11. Mischeinheit (2; 102) nach einem der vorhergehenden Ansprüche, **dadurch gekennzeichnet, dass** der erste Eintrittsstrom (F1), der von dem ersten Einlass (39) kommt, und der zweite Eintrittsstrom (C1), der von dem zweiten Einlass (41; 141) kommt, beim Durchströmen des Inneren der Mischmittel (13; 113) in Kontakt gebracht werden, um gemischt zu werden und den Austrittsstrom (M3) zu bilden, wobei der Austrittsstrom dann über den Auslass (43) abgeführt wird.

12. Mischbatterie (1), die mit einer Mischeinheit (2; 102) nach einem der vorhergehenden Ansprüche ausgestattet ist.

## Claims

1. Mixing unit (2; 102) for a mixer tap (1), the mixing unit (2; 102) having a generally cylindrical shape defining a main axis (X4) of the mixing unit, the mixing unit comprising:
- a first inlet (39) for a first incoming stream (F1) of fluid having a first temperature (Tf),
- a second inlet (41; 141) for a second incoming stream (C1) of fluid having a second temperature (Tc) which is greater than the first temperature,
- an outlet (43; 143) for an outgoing stream (M3),
- a control member (7; 107),
- mixing means (13; 113) for mixing the first and second incoming streams to form the outgoing stream, the mixing means (13; 113) including a mixing chamber (27) containing a set of mixing discs (13A, 13B, 13C) which extend in planes orthogonal with respect to the main axis (X4), which are made of ceramics, and at least one of which is actuated by the control member, for controlling the flow rate of the first incoming stream (F1) and of the second incoming stream (C1) and thus adjusting both the temperature and the flow rate of the outgoing stream (M3), and
- thermostatic means which comprise:
∘ a thermostatic element (73; 173) which includes both a thermosensitive part (75; 175) arranged at least in part at the outlet, and a part (77; 177) which is movable in translation relative to the thermosensitive part along a closure axis (X73; X173), and
∘ a closure member (87; 187) for the second inlet which is connected to the part which is movable in translation along the closure axis, the second inlet being situated upstream of the mixing means (13A, 13B, 13C),
the mixing unit (2; 102) being **characterised in that**:
- an orthogonal plane (P71; P171) is orthogonal with respect to the main axis (X4);
- the orthogonal plane (P71; P171) and the closure axis (X73; X173) intersect;
- the closure axis is inclined relative to said orthogonal plane and passes through said orthogonal plane.

2. Mixing unit (2; 102) according to claim 1, **characterised in that** the closure axis (X73; X173) forms a non-zero angle of inclination (β1; β101) of between -45° and 45° with the orthogonal plane (P71; P171).

3. Mixing unit (2; 102) according to claim 2, **characterised in that** the angle of inclination (β1; β101) is between -45° and -10° or between 10° and 45°.

4. Mixing unit (2; 102) according to any one of the preceding claims, **characterised in that** the mixing unit comprises a housing (79; 179) which brings the outlet (43; 143) into communication with the second inlet (41; 141) along the closure axis (X73; X173) and in which at least part of the thermostatic means is housed so as to close the communication between the outlet and the second inlet in a tight manner.

5. Mixing unit (2; 102) according to the preceding claim, **characterised in that** the housing (79; 179) has an insertion end (90) for insertion of the thermostatic means into its interior, the insertion end being arranged on the side of the outlet (43; 143), the mixing unit defining a clearance space (37; 137) for the thermostatic means, by way of which the thermostatic means can be mounted in the housing by translation of the thermostatic means along the closure axis (X73; X173) until at least part of the thermostatic means is inserted into the interior of the housing by way of the insertion end.

6. Mixing unit (2; 102) according to any one of the preceding claims, **characterised in that** the mixing unit comprises a sealing ring (71; 171) for sealing the mixing unit with a mixer tap body (1), the sealing ring extending in the orthogonal plane (P71; P171), the thermostatic means being passed through by the orthogonal plane and surrounded by the sealing ring.

7. Mixing unit (2) according to the preceding claim, **characterised in that** the mixing unit comprises a cartridge (11), containing the mixing means (13), and an additional casing (15) which is mounted in abutment against the cartridge and which includes the thermostatic means and the sealing ring (71).

8. Mixing unit (2; 102) according to any one of the preceding claims, **characterised in that** the mixing unit comprises a lower face (24) at the surface of which the first inlet (39) and the second inlet (41; 141) open, the second inlet being prolonged, towards the inside of the mixing unit, by a chicane-like conduit (32; 132) comprising a part (29; 129) which is closable by the closure member (87; 187), the closable part extending substantially coaxially with the closure axis (X73; X173), the chicane-like conduit connecting the second inlet (41; 141) to the mixing means (13; 113).

9. Mixing unit (2; 102) according to any one of the preceding claims, **characterised in that** the set of mixing discs (13A, 13B, 13C) comprises an upper disc (13A) and an intermediate disc (13B), the control member (7; 107) actuating the upper disc and the intermediate disc:
- in rotation, about the main axis (X4) or about a first axis which is parallel to the main axis (X4), in order to adjust the ratio between the flow rate of the first incoming stream (F1) and of the second incoming stream (C1) and therefore the temperature of the outgoing stream (M3); and
- in translation, along a second axis (X13) which is orthogonal with respect to the main axis (X4), in order to evenly vary the flow rate of the first incoming stream and of the second incoming stream, in order to adjust the flow rate of the outgoing stream.

10. Mixing unit (2; 102) according to any one of the preceding claims, **characterised in that** the control member (7; 107) comprises a lever allowing both the flow rate and the temperature of the outgoing stream (M3) to be controlled by adjusting the flow rates of the first incoming stream and of the second incoming stream, the lever being:
- pivotable about the main axis (X4) in order to vary the temperature of the outgoing stream; and
- pivotable about a third axis (X7), which is orthogonal with respect to the main axis (X4), in order to adjust the flow rate of the outgoing stream.

11. Mixing unit (2; 102) according to any one of the preceding claims, **characterised in that** the first incoming stream (F1) coming from the first inlet (39) and the second incoming stream (C1) coming from the second inlet (41; 141) are brought into contact as they pass through the mixing means (13; 113) in order to be mixed and form the outgoing stream (M3), the outgoing stream then being discharged *via* the outlet (43).

12. Mixer tap (1) equipped with a mixing unit (2; 102) according to any one of the preceding claims.
